(19) Europäisches Patentamt
European Patent Office
Office européen des brevets

(11) Veröffentlichungsnummer: **0 405 265 A1**

# (12) EUROPÄISCHE PATENTANMELDUNG

(21) Anmeldenummer: **90111389.4**

(22) Anmeldetag: **16.06.90**

(51) Int. Cl.[5]: **C08G 75/02**, B01D 53/22, B01D 71/66

(30) Priorität: **30.06.89 DE 3921500**

(43) Veröffentlichungstag der Anmeldung:
**02.01.91 Patentblatt 91/01**

(84) Benannte Vertragsstaaten:
**BE DE FR GB IT**

(71) Anmelder: **BAYER AG**

**D-5090 Leverkusen 1 Bayerwerk(DE)**

(72) Erfinder: **Dorf, Ernst-Ulrich, Dr.**
**Bodelschwinghstrasse 15**
**D-4150 Krefeld(DE)**
Erfinder: **Rüsseler, Wolfgang, Dr.**
**Waldhofstrasse 121**
**D-4150 Krefeld(DE)**
Erfinder: **Weymans, Günther, Dr.**
**Körnerstrasse 5,**
**D-5090 Leverkusen(DE)**

## (54) Polyarylensulfid-Folien zur Trennung von Gasen.

(57) Die Erfindung betrifft die Verwendung von Polyarylensulfid-Folien zur Abtrennung von Gasen, vorzugsweise schwefel- und nitrosehaltigen Gasen.

EP 0 405 265 A1

## POLYARYLENSULFID-FOLIEN ZUR TRENNUNG VON GASEN

Die Erfindung betrifft die Verwendung von Polyarylensulfid-Folien zur Abtrennung von Gasen, vorzugsweise schwefel- und nitrosehaltigen Gasen.

Aus der JP-A 2 196-140 sind elektrisch leitende transparente Folien bekannt, die unter anderem Polyphenylensulfid enthalten. Die Folien sollen ausgezeichnete Barriere-Eigenschaften haben. Neben der aufwendigen Herstellung haben sie den Nachteil, für die selektive Gastrennung schwefelhaltiger Substanzen nicht einsetzbar zu sein.

Aus der JP-A 1 242-841 sind Laminate aus Ethylen-Vinylacetat-Copolymer und anderen Thermoplasten bekannt, die gute Barriere-Eigenschaften haben sollen.

Aus der JP-A 1 000-432 sind Verbundfolien bekannt für die selektive Gastrennung. Die Membranen bestehen aus einem dünnen Polymerfilm, z.B. aus Polydimethylsiloxan, Polycarbonat, Polyvinylalkohol, Polyamid-6 oder Polysulfon, der auf eine mikroporöse Polyphenylensulfid-Folie mit Poren von 100 bis 20.000 Angström aufgetragen wird. Die Verbundfolien sollen für die Trennung bzw. Anreicherung von Gasen wie Wasserstoff, Sauerstoff, Schwefelwasserstoff, Methan usw. nützlich sein. Das aufwendige Herstellverfahren ist ein entscheidender Nachteil dieser Verbundfolien.

In der JP-A 2 149-307 werden Folien für die selektive Gastrennung beschrieben, die nach ihrer Herstellung nochmals in kochendem Wasser behandelt werden. Die Membranen bestehen aus hitzebeständigen Polymeren wie z.B. Polyetherimiden und Polyphenylensulfiden. Über die Verwendung zur Abtrennung schwefelhaltiger Substanzen ist kein Hinweis zu entnehmen.

Zur Trennung von Kohlendioxid aus Erdgas werden in der US-A 4 673 717 Membranen aus substituierten Polyarylenen, u.a. Polyphenylensulfiden, beschrieben.

Wichtig für gute Permeationseigenschaften ist bekanntlich die generelle Beobachtung, daß der Transport niedermolekularer Substanzen wie Gase und Flüssigkeiten in solchen Folien oder Membranen von der Art des verwendeten Thermoplasten und der niedermolekularen Substanz abhängt. Bei einer Anwendung, bei der es auf selektive Gastrennung ankommt, ist z.B. für die Folie wichtig, bestimmte Gase sehr gut, andere nur sehr schlecht durch die Folie durchzulassen. Solche Folien sind bereits bekannt; jedoch haben sie meistens eine zu geringe Wärmeformbeständigkeit.

Zur Verbesserung der Wärmeformbeständigkeit kann man Folien aus anderen Polymeren zu einem Verbund mit den hochselektiven Folien bringen. Dabei ist entscheidend für diese wärmefesten Zusatzfolien, daß sie die Selektivität nicht verschlechtern und z.B. möglichst viele Gase pro Zeit durch die wärmeformbeständige Komponente durchlassen. Die Verbundfolie kann nämlich nur dann den Vorteil von hoher Selektivität und hoher Wärmeformbeständigkeit günstig vereinen, wenn die wärmeformbeständige Folie keine Sperrschicht für die Gase bildet, die durch die hochselektive Folie getrennt werden sollen.

Bei der Verbrennung von fossilen Brennstoffen wie Erdöl, Schwarzkohle oder Braunkohle entstehen u.a. schwefelhaltige Gase wie Schwefeldioxid, Schwefelwasserstoff, $SO_3$, Stickoxide wie z.B. $NO_2$. Die Entschwefelung und Entstickung dieser Abgase ist wesentlich. Die zur Trennung der Abgase verwendeten Medien sollen gegen die zu trennenden Gase inert sein. Weiterhin müssen die Medien eine gute Durchlässigkeit der zu trennenden Gase haben, damit der Durchsatz pro verwendeter Membranfläche hoch ist und das Trennverfahren wirtschaftlich wird.

Bei der Herstellung z.B. von Schwefelsäure entstehen in der Flüssigkeit oder im Dampfraum eine Reihe von schwefelhaltigen Substanzen, die - zur Erhhung des Reinheitsgrades der herzustellenden Schwefelsäure - abgetrennt werden müssen. Auch hier sind Polymerfolien hoher Selektivität für schwefelhaltige Substanzen gefordert, die eine genügend hohe Chemikalienresistenz haben.

Es wurde nun gefunden, daß sich Folien oder Verbundfolien aus Polyarylensulfiden (PAS) vorzugsweise Polyphenylensulfiden (PPS) mit anderen Polymeren zur Abtrennung schwefelhaltiger oder nitrosehaltiger Substanzen eignen.

Gegenstand der Erfindung ist daher die Verwendung von Folien, vorzugsweise einer Dicke von mehr als 1 µm, vorzugsweise von 2 µm bis 2.000 µm, insbesondere 5 bis 250 µm, aus Polyarylensulfiden, vorzugsweise Polyphenylensulfiden, zur Abtrennung von Gasen, vorzugsweise schwefelhaltigen oder stickoxidhaltiger Gasen.

Die Folien können gegebenfalls (z.B. monoaxial, biaxial) orientiert und/oder thermofixiert sein.

Ein weiterer Gegenstand der Erfindung ist die Verwendung von Verbundfolien aus Polyarylensulfidfolien, vorzugsweise Polyphenylensulfidfolien, einer Dicke von 2 bis 2.000 µm, vorzugsweise 5 bis 250 µm, insbesondere 5 bis 100 µm, mit anderen Polymerfolien einer Dicke um 2 bis 1.500 µm, vorzugsweise 5 bis 200 µm, insbesondere 5 bis 80 µm, zur Abtrennung schwefelhaltiger oder stickoxidhaltiger Substanzen.

Erfindungsgemäß verwendbare Polyarylensulfid-(PAS)-Folien, vorzugsweise Polyphenylensulfid-(PPS)-Folien, können aus Polyarylensulfiden der Formel (I)

-Ar-S- (I)

hergestellt werden.

In Formel (I) steht -Ar- für eine allgemeine Arylengruppe. Beispiele sind p-Phenylen-, m-Phenylen-, o-Phenylen-Gruppen, alkylsubstituierte Phenyle, p,p′-Biphenyl-, p,p′-Diphenylether-, p,p′-Diphenylcarbonyl- oder höherwertige aromatische (Hetero)cyclen wie beispielsweise Naphthalin-Gruppen sein können. Gegebenenfalls können auch Beimengungen von Disulfid-, Dibenzothiophen-, Thiantren-, Sulfonstrukturen und Verzweigern enthalten sein. Die erfindungsgemäß geeigneten Polyarylensulfide der Formel (I) können weiterhin in bekannter Weise mit bekannten Endgruppen modifiziert sein.

Erfindungsgemäß verwendbare Polyarylensulfide zur Herstellung der Folie sind bekannt (z.B. US-A 3 354 129, EP-A 171 121) und handelsüblich (z.B. Ryton®, TEDUR®), Folien aus Polyarylensulfiden sind ebenfalls bekannt (z.B. EP-A 171 021, DE-A 2 916 841).

Bevorzugt haben die erfindungsgemäß geeigneten linearen oder verzweigten Polyarylensulfide mindestens zu 40 Gew.-%, bezogen auf das Gesamtgewicht der Komponente (b) - Struktureinheiten der allgemeinen Formel (II)

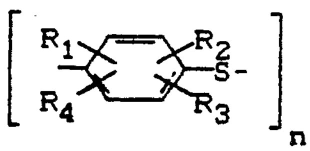

(II)

in welcher

$R_1$ bis $R_4$ unabhängig oder gleich sein können und $C_1$-$C_6$-Alkyl, Phenyl oder Wasserstoff sind.

Die Polyarylensulfide können bevorzugt auch Diphenyl-, Keton- und/oder Sulfon-Einheiten enthalten.

Andere Polymere im Sinne der erfindungsgemäß verwendbaren Verbundfolien sind generell Folien einer Dicke zwischen 2 und 2.000 µm aus

a) amorphen Thermoplasten mit einer Glastemperatur von mehr als 40 °C, bevorzugt von 50 °C bis 250 °C, besonders bevorzugt von 60 °C bis 220 °C,

b) teilkristallinen Thermoplasten mit einer Schmelztemperatur von mehr als 60 °C, bevorzugt von 80 °C bis 400 °C.

Als solche Polymere kommen z.B. in Frage die in der Literatur bekannten Polymere Polyhalo-olefine, Polyvinyle, Polyether, Polyacrylate, Polymethacrylate, Polyepoxide, Polyester, Polyamide, Polyarylensulfide, Polysulfone, Polyketone, Polyurethane, Polyimide, thermotrope LC-Polymere, lyotrope LC-Polymere.

Die Folien können nach bekannten Verfahren hergestellt werden, z.B. durch (Co)-Extrusion, durch Tiefziehen, durch Gießen von Lösungen usw.

Bevorzugt ist die Herstellung der Verbundfolien durch Coextrusion. Dabei werden bekanntlich die für die Schichten eingesetzten Kunststoffe aus je einem Extruder im thermoplastischen Zustand in eine Zwei- oder Mehrstoff-Extrusionsdüse eingespeist und in derselben zu einer Schicht vereinigt werden. Die aus dem Düsenschlitz austretende Verbundbahn wird in einem unmittelbar nachgeschalteten Glättwerk kalandriert.

Die Einzelschichten für die Folien können auch jede für sich in der gewünschten Dicke als selbständige Folien hergestellt und kontinuierliches Verpressen zwischen beheizten Walzen in der Wärme zu der Verbundfolie vereinigt werden. Ein unlösbarer Verbund der beiden oder mehrerer Folien kann z.B. erreicht werden, wenn die aufeinandergelegten Folien gemeinsam mit einer Geschwindigkeit von etwa 1 bis 100 m/min unter einem Liniendruck von 5 bis 800 N/cm durch einen Walzenspalt geführt werden. Die Walzentemperatur sollte so hoch sein, daß wenigstens die Folie aus anderen Polymeren als den PAS-Substanzen den thermoelastischen Zustandsbereich erreicht. Walzentemperaturen von 100 bis 320 °C sind in der Regel geeignet.

Die Folienherstellung durch Extrusion erfolgt beispielsweise, indem man das bei Temperaturen zwischen 250 °C und 400 °C, bevorzugt zwischen 250 °C und 380 °C, bekannte Folienextrusionsverfahren anwendet, wobei die Extrusionstemperatur durch die Glastemperatur des eingesetzten (Co-)polycarbonats variiert werden kann. Gegebenenfalls werden die Folien nach Abkühlung, bevorzugt in der Nähe ihrer Glastemperatur, nochmals uni- oder/und biaxial verstreckt.

Die Folienherstellung durch Tiefziehen erfolgt beispielsweise dadurch, daß man kurz oberhalb der Glastemperatur des PAS, vorzugsweise zwischen Raumtemperatur und 200 °C, Granulatblöcke des Polymeren durch rakeln zu Folien tiefzieht.

Die Folienherstellung durch Gießen der PAS-Losungen erfolgt beispielsweise, indem man konzentrierte

Lösungen des PAS in einem geeigneten Lösungsmittel auf ebene Oberflächen ausgießt und bei einer Temperaturführung der ebenen Oberflächen zwischen Raumtemperatur und 150 °C das Lösungsmittel anschließend verdampft. Man kann die konzentrierten Lösungen des PAS auch auf Flüssigkeiten aufbringen, welche eine höhere Dichte als die der konzentrierten Lösungen haben, nicht mit dem verwendeten Lösungsmittel verträglich sind und das PAS nicht lösen, und nach dem Spreiten die Folien durch Verdampfen des für das PAS verwendeten Lösungsmittels und gegebenenfalls auch der Flüssigkeit mit höherer Dichte gewinnen.

Die Herstellung der Verbundfolien kann auch erfolgen, indem man zunächst in bekannter bzw. in der oben beschriebenen Weise in geeigneter Temperaturführung die Folien der Einzelkomponenten herstellt. Anschließend bringt man die nicht abgekühlten Folien ohne größere Verstreckung auf eine gemeinsame Temperatur, die vorzugsweise zwischen Raumtemperatur und 390 °C liegt. Die Folien werden dann über Walzen zusammengeführt und kurzzeitig verpreßt. Dabei kann ein Druck von 2 bis 500 bar angewendet werden. Das Verfahren kann auch mit mehr als einer anderen Folie als der aus den PAS durchgeführt werden, wobei beispielsweise zunächst jeweils die anderen Folien in der bisher bekannten Weise zusammengebracht werden und danach mit der Folie aus den PAS unter dem oben beschriebenen Druck verpreßt werden.

Beispiele

Der Durchgang eines Gases durch eine dichte Polymermembran wird durch einen Lösungs-Diffusionsvorgang beschrieben. Die kennzeichnende Konstante für diese Prozeß ist der Permeationskoeffizient P, der angibt, welches Gasvolumen V bei gegebener Druckdifferenz ΔP in einer bestimmten Zeit t durch eine Folie bekannter Fläche F und Dicke d hindurchtritt. Für den stationären Zustand läßt sich aus den Differentialgleichungen des Permeationsvorgangs ableiten:

$$P = \frac{V \cdot d}{F \cdot t \cdot \Delta P}$$

Darüber hinaus ist die Permeation abhängig von der Temperatur und der Gasfeuchte.

Die Meßanordnung besteht aus einem thermostatisierten Zwei-Kammer-System. Die eine Kammer ist für die Aufnahme des Vorgabegases und die andere für die Aufnahme des Permeates ausgelegt. Die Kammern sind durch die zu messende Polymermembran getrennt.

Vor der Gasvorgabe werden beide Kammern auf 0,001 mbar evakuiert und die Vorgabekammer dann mit dem Gas gefüllt. Das permeierte Gas bewirkt dann in der Permeatkammer bei konstantem Volumen einen Druckanstieg, der mit einem Druckaufnehmer, z.B. Baratron der Firma MKS, in Abhängigkeit von der Zeit bis in den stationären Gasdurchgang registriert wird Hieraus wird V bei Normtemperatur nach der oben angegebenen Formel errechnet, t ist bekannt. Die vorgegebene Druckdifferenz unter Berücksichtigung des äußeren Luftdruckes wird jeweils auf 10.000 Pa eingestellt. Die Membranfläche F ist bekannt. Die Membrandicke d wird mittels Mikrometerschraube als Mittel aus 10 unabhängigen über die Membranfläche verteilten Dickenmessungen ermittelt.

Aus diesen Größen ist der Permeationskoeffizient P zu bestimmen in der Dimension

$$[P] = \left[ \frac{cm^3 \cdot mm}{m^2 \cdot 24h \cdot 10.000Pa} \right]$$

wobei auf eine Membrandicke von 1 mm bezogen ist. Weitere Meßparameter sind:
Temperatur: 25 °C (Genauigkeit 1 °C)
rel. Gasfeuchte: 0 %

a) Verwendete Substanzen:

Substanz 1

amorphe Extrusions-Folie einer Dicke von 100 µm aus PAS nach EP-OS 171 021

Substanz 2

Folie einer Dicke von 20 µm aus PAS nach EP-A 171 021, biaxial orientiert nach dem in Encyclopedia of Polymer Science and Technology, Vol. 2, (1965), Seiten 338 bis 383 beschriebenen Verfahren.

Substanz 3

Wie Substanz 2, jedoch mit einer Dicke von 10 µm.

b) Meßergebnisse:

Die nachfolgende Tabelle faßt die Permeabilität P (Einheiten wie oben angegeben) für $SO_2$ sowie die Trennkoeffizieten T (Verhältis der Permeabilitäten, dimensionslos) für die Gase $SO_2$:$O_2$, $SO_2$:$CH_4$, $SO_2$:$N_2$ zusammen.

| Substanz | P($SO_2$) | T($O_2$) | T($N_2$) | T($CH_4$) |
|---|---|---|---|---|
| -1- | 55,4 | 10,0 | 18,6 | 37,2 |
| -2- | 51,4 | 13,5 | 75,6 | 40,0 |
| -3- | 60,0 | 13,2 | 46,0 | 59,4 |

**Ansprüche**

1. Verwendung von Polyarylensulfidfolien zur Gastrennung.
2. Verwendung von Polyarylensulfidfolien zur Abtrennung schwefelhaltiger oder stickoxidhaltiger Gase.
3. Verwendung von Folien nach Anspruch 1, dadurch gekennzeichnet, daß sie eine Dicke von mehr als 1 µm, vorzugsweise von 2 µm bis 2.000 µm, insbesondere 5 bis 250 µm, haben.

Europäisches Patentamt

# EUROPÄISCHER RECHERCHENBERICHT

Nummer der Anmeldung

EP 90 11 1389

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN Band 10, Nr. 139 (C-348)(2196), 22. Mai 1986; & JP-A-61000432 (DAINIPPON INK KAGAKU KOGYO K.K.) 06.01.1986 * Zusammenfassung * | 1 | C 08 G 75/02<br>B 01 D 53/22<br>B 01 D 71/66 |
| X | US-A-4 596 860 (E.S. PERCEC et al.) * Spalte 1, Zeilen 52-68; Spalte 2, Zeilen 1-13; Spalte 7, Zeilen 37-47 *; & US-A-4673717 (Kat. D) | 2 | |
| D,A | EP-A-0 171 021 (BAYER AG) * Patentansprüche 35-42 * | 3 | |

RECHERCHIERTE SACHGEBIETE (Int. Cl.5)

C 08 G
B 01 D

Der vorliegende Recherchenbericht wurde für alle Patentansprüche erstellt

| Recherchenort | Abschlußdatum der Recherche | Prüfer |
|---|---|---|
| BERLIN | 19-09-1990 | CORDERO ALVAREZ M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)